# EUROPÄISCHE PATENTSCHRIFT

(11) **EP 0 642 901 B1**
(45) Veröffentlichungstag und Bekanntmachung des Hinweises auf die Patenterteilung: **24.09.1997**
(21) Anmeldenummer: 94109683.6
(22) Anmeldetag: 23.06.1994
(51) Int. Cl.: B29B 9/02

(54) **Vorrichtung zum Granulieren von Kunststoffen**
Apparatus for granulating plastics
Dispositif pour la granulation de matières plastiques

(30) Priorität: 11.09.1993 DE 4330834
(43) Veröffentlichungstag der Anmeldung: 15.03.1995
(73) Patentinhaber: HERMANN BERSTORFF Maschinenbau GmbH, D-30627 Hannover (Kleefeld) (DE)
(72) Erfinder: Voigt, Jürgen, D-29339 Wathlingen (DE)

(56) Entgegenhaltungen:
- GB-A- 2 016 356
- GB-A- 2 132 549
- US-A- 3 271 821

## Beschreibung

Die Erfindung betrifft eine Vorrichtung zum Granulieren von Kunststoffen nach dem Oberbegriff des Hauptanspruchs.

Bei einer aus der US-PS 3,271,821 bekannten Granuliereinrichtung ist es gemäß dem einleitenden Teil des Hauptanspruchs bekannt, die Messerwelle in Zustellrichtung mit einem sich am Gehäuse abstützenden Hydraulikzylinder zu beaufschlagen.

Die Schneidmesser sind hier mittels Schrauben an der Nabe des Messerkopfes befestigt. Beim Schneidvorgang liegen die Schneidmesser an der Schneidplatte an. Wenn die Schneidmesser mit einer gewissen Vorspannung gegen die Schneidplatte gefahren werden, heben die in Umfangsrichtung gesehenen äußeren Kanten der Schneidmesser geringfügig von der Schneidplatte ab, so daß in den umfangsmäßig äußeren Bereichen kein glatter Schnitt erfolgt. Der in Umfangsrichtung gesehene innere Bereich der runden Schneidplatte wird durch die Schneidmesser überproportional stärker druckmäßig belastet, so daß in diesem Bereich ein starker Verschleiß auftritt.

Der Erfindung liegt die Aufgabe zugrunde, eine Granuliervorrichtung zu schaffen, deren Schneidmesser unter konstanter gleichmäßig einstellbarer Anpreßkraft unter Beibehaltung einer ständig parallelen Anlage und ohne teilweise Abbiegung der Messer von der Schneidplatte durch die einseitige Einspannung der Schneidmesser betrieben werden können.

Diese Aufgabe wird durch die Merkmale des Hauptanspruchs gelöst. Die weitere Ausgestaltung der Erfindung ist den Unteransprüchen zu entnehmen.

Dadurch, daß die Schneidmesser (13) mit der Nabe des Messerkopfes (12) mittels einer Koppelgelenkverbindung verbunden sind, die von zwei koaxial und übereinander angeordneten Schwingen (15, 16) gebildet ist und erreicht, daß unabhängig vom jeweiligen Andruck eine parallele Stellung der Schneidkanten (13a) der Schneidmesser (13) zur Schneidplatte (3) sichergestellt ist.

Gemäß einer bevorzugten Ausführungsform der Erfindung ist es vorgesehen, daß die Koppelgelenkverbindung von tellerförmigen, vieleckigen oder sternförmig gestalteten Schwingen (15, 16) gebildet ist.

Im Rahmen der Erfindung kann es auch vorgesehen sein, daß die Schwingen (15, 16) durch koaxial übereinander angeordnete, stabförmige, einzeln an den Schneidmessern (13) befestigte Trägerelemente gebildet werden.

Vorteilhaft kann es sein, wenn zur Erzeugung bzw. Verstärkung des Messerandrucks die Schwingen (15, 16) an mindestens einem der als Koppel wirkenden Bauteile (Nabe bzw. Schneidmesser 13) fest eingespannt befestigt sind.

Die Aufgabe wird durch die Merkmale des Hauptanspruchs gelöst.

Es erfolgt erfindungsgemäß eine stetige gleichmäßige Anpressung über die Länge der Messerkanten des Messerkopfes. Die Anpreßkraft der Schneidmesser an die Lochplatte ist innerhalb eines begrenzten Anstellbereiches in Abhängigkeit des Anstellweges genau bestimmbar. Die Anpreßkraft ergibt sich aus der relativen Anstellkraft der hydraulischen Zylindereinheit und der Koppelgelenkverbindung. Dadurch ist innerhalb des einstellbaren Arbeitsbereiches in jeder Anstellage eine weiche federnde Auflage der Schneidmesser an der Lochplatte gegeben.

Die gemäß dem Stand der Technik das Messer verformende Schneidkraft (Linienlast) auf der Schneidkante wird kompersiert durch ein mit Hilfe des Koppelgelenkes eingeleitetes Gegennoment, wodurch in jedem Belastungszustand eine gleichförmige Lastverteilung auf der Schneidkante, d.h. eine Parallelführung, der Messer erreicht wird.

Durch die vollflächige gleichmäßige Anlage der Schneidmesser an der Schneidplatte wird ebenfalls die Entstehung von Schwingungen wirkungsvoll vermieden.

Ein Ausführungsbeispiel der Erfindung wird anhand der Zeichnung erläutert.

Es zeigen:
- Fig. 1: einen Längsschnitt durch eine Granuliervorrichtung-
- Fig. 2: einen mit "X" bezeichneten Ausschnitt aus Fig. 1.
- Fig. 3: einen Halbquerschnitt durch ein mittels einer Koppelgelenkverbindung an einer Nabe befestigtes Schneidmesser in paralleler Stellung Schneidmesser/Lochplatte und in ungespanntem Zustand (leicht vorgespannt).
- Fig. 3a: die Koppelgelenkverbindung stilisiert dargestellt, in leicht vorgespanntem Zustand.
- Fig. 4: einen Schnitt durch eine Koppelgelenkverbindung in gespanntem vollbelastetem Zustand.
- Fig. 4a: eine stilisierte Koppelgelenkdarstellung in gespanntem vollbelastetem Zustand (stark überzeichnet dargestellt, üblicherweise max. 200 µm (My) Reaktionsweg).
- Fig. 5: eine Drausicht auf tellerförmig ausgebildete Koppelgelenkverbindungen.
- Fig. 6 und 7: Draufsichten auf weitere Ausführungsformen von Koppelgelenkverbindungen.

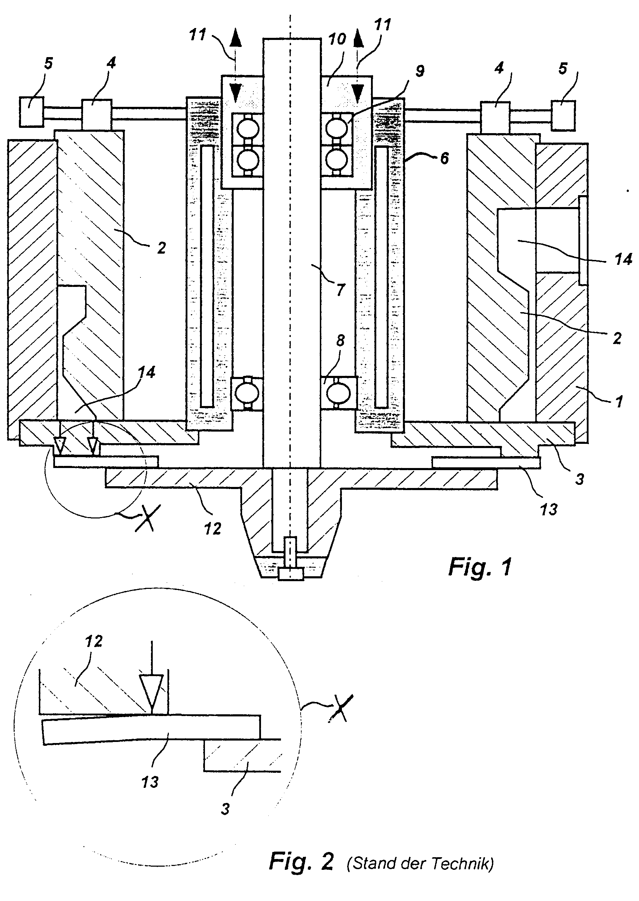

Die in Fig. 1 gezeigte stilisiert dargestellte Granuliervorrichtung weist ein Gehäuse 1 auf mit einem zylinderförmigen Einsatz 2, die beide mit der kreisförmig ausgebildeten Schneidplatte 3 verbunden sind. In Einsatz 2 ist der Schmelzekanal 14 eingearbeitet.

An der oberen Seite des Einsatzes 2 sind Auflager 4 befestigt, durch die Schraubbolzen 5 geführt werden, die an ein zylinderförmiges Lagergehäuse 6 angreifen, welches in Fig. 1 unten beweglich auf der Schneidplatte 3 gelagert ist.

Mittels der am Lagergehäuse 6 angreifenden Schraubbolzen 5, von denen in Umfangsrichtung mehrere in gleichmäßigen Abständen vorgesehen werden, wird am Anfang einmal in Umfangsrichtung ein planparalleler Abstand zwischen Schneidmesser 13 und Schneidplatte 3 eingestellt.

Dann wird die Messerwelle 7 (Fig. 1) nach oben gefahren, so daß alle Schneidmesser 13 planparallel zur Anlage gegen die Schneidplatte 3 gelangen.

In dem Lagergehäuse 6 ist die Messerwelle 7 in Lagern 8 und 9 angeordnet. Der Lagerhülse 10 ist mit der Messerwelle 7 verbunden, so daß beide Teile sich durch nicht gezeigte Hydraulikzylinder in Richtung der Pfeile 11 bewegen lassen. Diese axiale Bewegung wird somit über die Messerwelle 7 auf den Messerkopf 12 übertragen, an dem die Schneidmesser 13 befestigt sind, so daß somit der Abstand zwischen der Schneidplatte 3 und den Schneidmessern 13 eingestellt werden kann.

Durch den umlaufenden Schmelzekanal 14 wird dem Granulator Kunststoffschmelze zugeführt, die durch die nicht näher dargestellten Bohrungen der Schneidplatte 3 nach unten gedrückt wird und als Einzelstränge aus der Lochplatte 3 austreten.

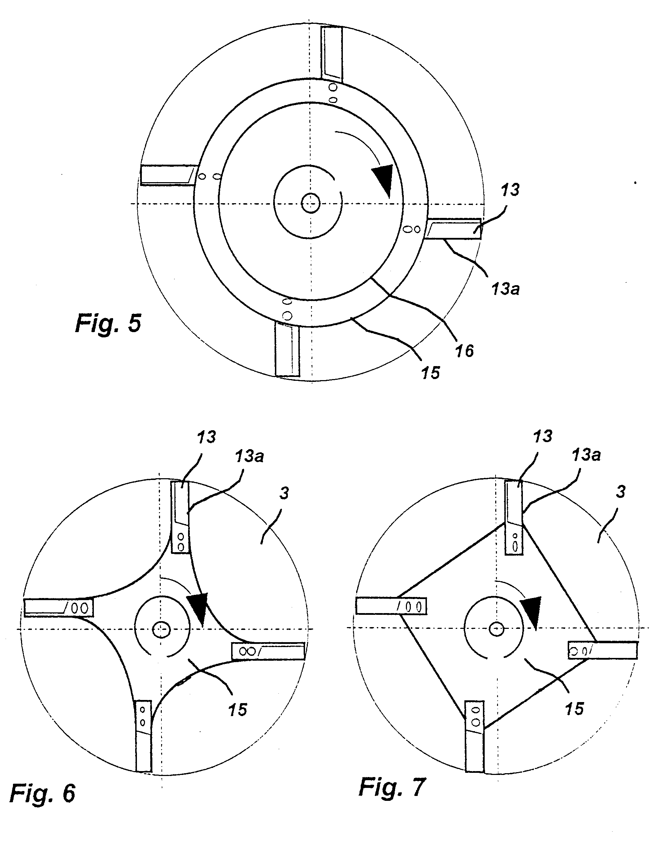

Nunmehr kann der Granuliervorgang durch Einschalten des Antriebes der Messerwelle 7 mittels einer nicht gezeigten Antriebseinheit beginnen, wodurch die Schneidmesser 13, wie in Fig. 5 gezeigt, rotieren und die austretenden Schmelzestränge zu kleinen Granulaten abgeschnitten werden, die üblicherweise in ein Kühlwasserbad fallen und damit abgeführt werden.

Wie in Fig 2 gezeigt, wird bei Granuliereinrichtungen gemäß dem Stand der Technik der äußere Bereich der Schneidmesserkante durch das Anfahren gegen die Schneidplatte von dieser leicht weggedrückt, so daß ein Abstand entsteht, der in Fig. 2 stark vergrößert dargestellt ist, jedoch nur max. 200 µm (My) beträgt.

Erfindungsgemäß wird dieser Abstand bzw. das einseitige Abheben der Messerkante 13a vermieden durch die Anordnung einer Koppelgelenkverbindung zwischen den Schneidmessern 13 und der Nabe bzw. dem Messerkopf 12.

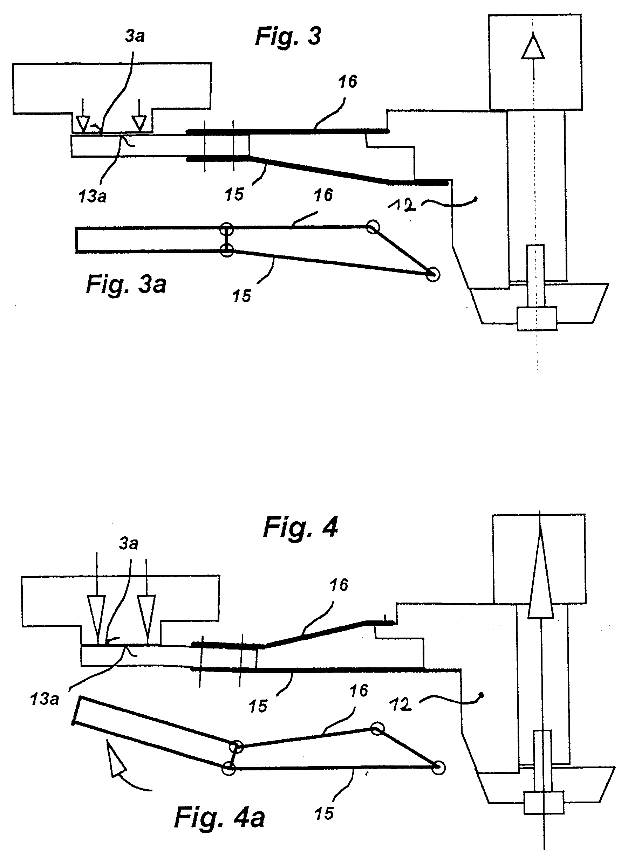

Die Schwingen 15, 16 dieser Koppelgelenkverbindung verden durch übereinander angeordnete, die Schneidmesser 13 tragende an dem Messerkopf 12 befestigte tellerförmig gestaltete Schwingen 15 und 16 gebildet, wie in Fig. 3 und 3a dargestellt wird. Gezeigt wird in Fig. 3 und 3a eine Koppelgelenkverbindung in leicht vorgespanntem Zustand, so daß nur eine sehr leichte Anlage der rotierenden Messerkanten 13a gegen die Schneidplattenoberfläche 3a erfolgt. Bei einer unter einer stärkeren Kraft durchgeführten Auflage würde ohne die erfindungssgemäß Koppelgelenkverbindung ein einseitiges Abheben der Messerkante 13a, wie gezeigt in Fig. 2, erfolgen.

Durch die Koppelgelenkverbindung wird das Abheben jedoch vermieden, wie in Fig. 4 und 4a gezeigt wird.

Aus Fig. 4 ist ersichtlich, daß trotz größerer Anpreßkraft der Messerkante 13a gegen die Schneidplattenoberfläche 3a eine Planparallelität erhalten bleibt, weil die Messerkante 13a zunächst gegen den äußeren Rand der runden Schneidplatte gedrückt wird und erst danach am inneren Rand zur Anlage gelangt und somit planparallel anliegt. Das einseitige Anheben, wie gezeigt in Fig. 2, wird somit durch die Koppelgelenkverbindung kompensiert.

In Fig. 4a wird der Kraftverlauf der Koppelgelenkverbindung in stark überzeichneter Form gezeigt, aus der ersichtlich ist, warum trotz steigender Anpreßkraft immer eine planparallele Anlage der Messerkante 13a gegen die Oberfläche der Schneidplatte 3a erfolgt.

In Fig. 5 wird eine, durch zwei miteinander verbundene tellerförmige Schwingen gebildete Koppelgelenkverbindung 15 und 16 gezeigt.

In Fig. 6 und 7 werden vieleckige bzw sternförmige Schwingen 15 für die Führung der Schneidmesser 13 gezeigt.

Das einseitige Anheben der Schneidkanten 13a durch die stärkere Anpressung unterbleibt, so daß auch ein einseitiger Messer- und Schneidplattenverschleiß wirkungsvoll vermieden wird.

### Bezugszeichenliste:

- 1: = Gehäuse
- 2: = Einsatz
- 3: = Schneidplatte
- 3a: = Schneidplattenoberfläche
- 4: = Auflager
- 5: = Schraubbolzen
- 6: = Lagergehäuse
- 7: = Messerwelle
- 8: = Lager
- 9: = Lager
- 10: = Lagerhülse
- 11: = Pfeile
- 12: = Messerkopf
- 13: = Schneidmesser
- 13a: = Messerkante
- 14: = Schmelzekanal
- 15: = Koppelgelenkschwinge
- 16: = Koppelgelenkschwinge

## Patentansprüche

1. Vorrichtung zum Granulieren von Kunststoffen mit einem an eine Granulierhaube anflanschbaren ortsfesten Gehäuse (1) und einer Messerwelle (7), auf der ein Messerkopf (12) angeordnet ist, an dessen Nabe mit ihrer Schnittkante (13a) auf einer Schneidplatte (3) aufliegende Schneidmesser (13) befestigt sind, wobei die Messerwelle (7) einerseits in einer sie aufnehmenden Bohrung des Gehäuses (1) und andererseits in einer Lagerhülse (10) gelagert ist mit der sie durch eine hydraulische Zylindereinheit längsaxial verschiebbar ist,
**dadurch gekennzeichnet,**
daß die Schneidmesser (13) mit der Nabe des Messerkopfes (12) mittels einer Koppelgelenkverbindung verbunden sind, die von zwei koaxial und übereinander angeordneten Schwingen (15, 16) gebildet ist, derart, daß unabhängig vom jeweiligen Andruck eine parallele Stellung der Schneidkanten (13a) der Schneidmesser (13) zur Schneidplatte (3) sichergestellt ist.

2. Vorrichtung nach Anspruch 1, dadurch gekennzeichnet, daß die Koppelgelenkverbindung von tellerförmigen, vieleckigen oder sternförmig gestalteten Schwingen (15, 16) gebildet ist.

3. Vorrichtung nach Anspruch 1, dadurch gekennzeichnet, daß die Schwingen (15, 16) durch koaxial übereinander angeordnete, stabförmige, einzeln an den Schneidmessern 13 befestigte Trägerelemente gebildet werden.

4. Vorrichtung nach Anspruch 1, dadurch gekennzeichnet, daß zur Erzeugung bzw. Verstärkung des Messerandrucks die Schwingen (15, 16) an mindestens einem der als Koppel wirkenden Bauteile (Nabe bzw. Schneidmesser 13) fest eingespannt befestigt sind.

## Claims

1. Apparatus for granulating plastics materials, having a fixed housing (1), which is flange-mountable on a granulating feedhead, and a cutter shaft (7), on which a cutter head (12) is disposed, cutting blades (13) being secured on the hub of said cutter head and lying with its cutting edge (13a) on a cutting plate (3), the cutter shaft (7) being mounted at one end in a bore formed in the housing (1) for receiving said shaft and being mounted at the other end in a bearing sleeve (10), with which it is longitudinally axially displaceable by means of a hydraulic cylinder unit, characterised in that the cutting blades (13) are connected to the hub of the cutter head (12) by means of a coupling joint connection, which is formed by two rocker arms (15, 16), disposed coaxially with each other and above each other, in such a manner that, independently of the particular contact pressure, a parallel position of the cutting edges (13a) of the cutting blades (13) relative to the cutting plate (3) is ensured.

2. Apparatus according to claim 1, characterised in that the coupling joint connection is formed by plate-like, polygonal or star-shaped rocker arms (15, 16).

3. Apparatus according to claim 1, characterised in that the rocker arms (15, 16) are formed by rod-like carrier elements, which are coaxially disposed above each other and are individually secured on the cutting blades (13) .

4. Apparatus according to claim 1, characterised in that, to produce or reinforce the cutter contact pressure, the rocker arms (15, 16) are secured to at least one of the component parts (hub or cutting blade 13), which act as couplers, in a firmly clamped-in position.

## Revendications

1. Machine pour la granulation de matières plastiques, comprenant un carter (1) fixe, pouvant être fixé à une hotte de granulation par des brides et un arbre porte-lames (7) sur lequel est agencée une tête porte-lames (12) au moyeu de laquelle sont fixées des lames de coupe (13) qui sont appuyées sur une plaque de coupe (3) par leur arête de coupe (13a), l'arbre porte-lames (7) étant monté, d'une part, dans un perçage du carter (1) qui le reçoit et, d'autre part, dans une douille de palier (10) avec lequel il peut être déplacé dans la direction longitudinale axiale par une unité hydraulique à cylindre,
caractérisé
en ce que les lames de coupe (13) sont reliées au moyeu de la tête porte-lame (12) au moyen d'une liaison à quadrilatère déformable, qui est composée de deux bras oscillants (15, 16) disposés coaxialement et l'un au-dessus de l'autre, de telle sorte qu'indépendamment de la pression, il est garanti d'obtenir une position parallèle des arêtes de coupe (13a) des lames de coupe (13) par rapport à la plaque de coupe (3).

2. Dispositif selon la revendication 1, caractérisé en ce que la liaison à quadrilatère déformable est formée de bras oscillants (15, 16) en forme de disque, ou encore polygonaux ou en étoile.

3. Dispositif selon la revendication 1, caractérisé en ce que les bras oscillants (15, 16) sont formés d'éléments porteurs disposés coaxialement l'un au-dessus de l'autre, en forme de barre et fixés individuellement aux lames de coupe (13).

4. Dispositif selon la revendication 1, caractérisé en ce que, pour produire ou renforcer la pression d'application des lames, les bras oscillants (15, 16) sont fixés par encastrement rigide à au moins l'un des éléments (le moyeu ou la lame de coupe 13) qui se comportent comme des biellettes.
